(19) Europäisches Patentamt
European Patent Office
Office européen des brevets

(11) **EP 3 982 151 B1**

(12) **EUROPEAN PATENT SPECIFICATION**

(45) Date of publication and mention of the grant of the patent:
**28.06.2023 Bulletin 2023/26**

(21) Application number: **21198065.1**

(22) Date of filing: **21.09.2021**

(51) International Patent Classification (IPC):
**G01S 7/481** (2006.01)    **G01S 7/486** (2020.01)
**G01S 7/487** (2006.01)    **G01S 17/931** (2020.01)

(52) Cooperative Patent Classification (CPC):
**G01S 7/486; G01S 7/4816; G01S 7/4817;
G01S 7/4876; G01S 17/931**

(54) **LIDAR DETECTION METHODS AND SYSTEMS**

LIDAR-DETEKTIONSVERFAHREN UND -SYSTEME

SYSTÈMES ET PROCÉDÉS DE DÉTECTION LIDAR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.10.2020 RU 2020132857
15.09.2021 US 202117476455**

(43) Date of publication of application:
**13.04.2022 Bulletin 2022/15**

(73) Proprietor: **YANDEX SELF DRIVING GROUP LLC
Moscow, Skolkovo 121205 (RU)**

(72) Inventors:
• **GOLIKOV, Andrey Victorovich
124536 Moscow, Zelenograd (RU)**
• **ORLOV, Nikolay Evgenevich
427967 Sarapul, Udmurtskaya Resp (RU)**
• **SOLOMENTSEV, Dmitry Valentinovich
127549 Moscow (RU)**
• **KUZNETSOV, Vladimir Albertovich
121614 Moscow (RU)**

(74) Representative: **BCF Global
Centre d'Entreprise et d'Innovation
56, Bd Niels Bohr
CS 52132
69603 Villeurbanne Cedex (FR)**

(56) References cited:
**US-A1- 2019 302 246    US-A1- 2020 103 510
US-B1- 10 775 508**

## Description

The present technology relates to Light Detection and Ranging (LiDAR) systems and methods for detecting objects in a region of interest.

## BACKGROUND

Several computer-based navigation systems that are configured for aiding navigation and/or control of vehicles have been proposed and implemented in the prior art. These systems range from more basic map-aided localization-based solutions - i.e. use of a computer system to assist a driver in navigating a route from a starting point to a destination point; to more complex ones such as computer-assisted and/or driver-autonomous driving systems.

Some of these systems are implemented as what is commonly known as a "cruise control" system. Within these systems, the computer system boarded on the vehicles maintains a user-set speed of the vehicle. Some of the cruise control systems implement an "intelligent distance control" system, whereby the user can set up a distance to a potential car in front (such as, select a value expressed in a number of vehicles) and the computer system adjusts the speed of the vehicle at least in part based on the vehicle approaching the potential vehicle in front within the pre-defined distance. Some of the cruise control systems are further equipped with collision control systems, which systems, upon detection of the vehicle (or other obstacles) in front of the moving vehicle, slow down or stop the vehicle.

Some of the more advanced systems provide for a fully autonomous driving of the vehicle without direct control from the operator (i.e. the driver). These autonomously driven vehicles include systems that can cause the vehicle to accelerate, brake, stop, change lane and self-park.

One of the main technical challenges in implementing the above systems is the ability to detect objects located around the vehicle. In one example, the systems may need the ability to detect the vehicle in front of the present vehicle (the present vehicle having the system onboard), which vehicle in front may pose a risk / danger to the present vehicle and may require the system to take a corrective measure, be it braking or otherwise changing speed, stopping or changing lanes.

LiDAR-based object detection generally comprises transmitting beams of light towards the region of interest, and detecting reflected light beams, such as from objects in the region of interest, to generate a representation of the region of interest including any objects. Lasers emitting pulses of light within a narrow wavelength are often used as the radiation (light) source. The position and distance of the object can be computed using *inter alia* Time of Flight calculations of the emitted and detected light beam. By computing such positions as "data points", a digital multi-dimensional representation of the surroundings can be generated.

Generally, as for the physics of LiDAR-based object detection, one approach currently known in the art is based on utilizing a pulsed emission and is referred to as Time of Flight (ToF) LiDAR systems. In ToF LiDAR systems, each LiDAR sensor emits a short pulse of a predetermined wavelength and further registers a time that it takes for the pulse to scatter from a surrounding object and to return to the respective LiDAR sensor. By rotating the ToF LiDAR system, positioned at the top of the vehicle, comprising a plurality of such LiDAR sensors, by 360 degrees, a 3D representation of the surroundings of the vehicle can be generated.

The 3D representation is formed in part by reflected beams received by the LIDAR which generates data points representative of the surrounding objects. These points form clouds that represent the surrounding environment and form a 3D map. Each point in the point cloud is associated with coordinates in a coordinate space. Additionally, each point can be associated with some additional information such as the distance to the object from the self-driving vehicle. Other information may be associated with the points in the point cloud.

The more points with acceptable quality are obtained, the better. In this case, a computer of the self-driving vehicle can perform tasks of various cognitive complexity using the point cloud, e.g. filtering, clustering or sampling of the points, merging of the point clouds, recognizing the object, etc. The quality of performing these separate tasks affects the general quality of localization and navigation of the self-driving vehicle. Precise information on the surrounding objects improves the safety of driving.

However, under certain circumstances, for example, objects in close proximity to the self-driving vehicle may be more difficult to detect with precision.

## SUMMARY

Therefore, there is a need for systems and methods which avoid, reduce or overcome the limitations of the prior art.

Certain prior art approaches have been proposed.

United States Patent Application Publication No.: 2020/0103510-A1 published on April 02, 2020, assigned to Waymo LLC, and entitled "*Light Detection and Ranging (LIDAR) Device with an Off-Axis Receiver*" describes a LIDAR device with light sources that emit light and a transmit lens that directs the emitted light to illuminate a region of an environment with a field-of-view defined by the transmit lens. The LIDAR device also includes a receive lens that focuses at least a portion of incoming light propagating from the illuminated region of the environment along a predefined optical path. The LIDAR device also includes an array of light detectors positioned along the predefined optical path. The LIDAR device also includes an offset light detector positioned outside the predefined optical path. The LIDAR device also includes a controller that determines whether collected sensor data from the array of light detectors includes data associated with another light source different than the light source of the device based on output from the offset light detector.

**United States Patent Application Publication No.:** US2018/0074198-A1 published on March 15, 2018 assigned to Qualcomm Inc., and entitled "*Optical beam identification using optical demodulation* " describes techniques for identifying optical beams incident upon a sensor of a light detection and ranging (LIDAR) system. In certain aspects, a sensor coupled to the LIDAR system receives a first optical beam comprising a first frequency and a second optical beam comprising a second frequency. The LIDAR system may include a shutter coupled to the sensor and configured to operate at a third frequency, wherein operating the shutter while receiving the first optical beam comprising the first frequency results in a first signal with a fourth frequency and operating the shutter while receiving the second optical beam comprising the second frequency results in a second signal with a fifth frequency. Furthermore, the LIDAR system may include processing logic configured to detect the first signal with the fourth frequency and identify the first optical beam using a known association between the first optical beam and the fourth frequency.

However, unlike the prior art approaches, the developers of the present technology have realized that the quality of detection of objects around the self-driving vehicle may depend on the physical characteristics of optical elements in the LIDAR system. Lenses and other optical elements may reflect the emitted light beam back within the LIDAR system, causing an effect of self-reflection within the system. Self-reflection may impact the detection of close objects more than objects further away. The light reflected from the close objects reaches the detection unit very quickly, and the signal of the light beam reflected from the surrounding objects can be intercepted by the light beam reflected from the inner optics of the LIDAR system.

Thus, the developers of the present technology have devised a method directed to minimizing, reducing or eliminating self-reflection through selectively restricting and permitting access of light to an inner detection pathway leading to a receiver component. A shutter component is proposed whose modulation between open and closed positions, in synchronization with an emission of an output beam by a radiation source component, can minimize or reduce the effects of self-reflection in LiDAR systems and improve detection of objects in close proximity to a self-driving vehicle. In certain embodiments, the accuracy and precision of the detection is improved, thereby providing for a safer operation of the vehicle.

In accordance with a first broad aspect of the present technology, there is provided a LIDAR system for detecting objects in a region of interest of an autonomous vehicle comprising: a radiation source component configured to emit output beams; a scanner component configured to direct the output beams onto the region of interest; a receiver component configured to receive input beams reflected from objects in the region of interest along an inner detection pathway; a shutter component configured to modulate between a closed position and an open position, the inner detection pathway being at least partially blocked when the shutter component is in the closed position, and the inner detection pathway being open when the shutter component is in the open position; a controller component communicatively coupled to the shutter component such that: the shutter component is in the closed position while the radiation source component is emitting the output beams, and the shutter component is in the open position while receiving the reflected input beams of the given output beams from the region of interest.

In certain embodiments, the controller component is further configured to cause the shutter component to modulate from the closed position to the open position when the output beams leave an inner emission pathway of the LIDAR system.

In certain embodiments, the controller component is further configured to cause the shutter component to modulate from the closed position to the open position when the output beams reach a predetermined distance from the LIDAR system.

In certain embodiments, the output beams are emitted as a series of output beams, and the controller component is further configured to cause the shutter component to be in the closed position while the radiation source component is emitting all beams of the series of output beams, and to cause the shutter component to modulate from the closed position to the open position once every beam from the series of the output beams has left an inner emission pathway of the LIDAR system.

In certain embodiments, the output beams are emitted as a series of output beams, and the controller component is further configured to cause the shutter component to be in the closed position while the radiation source component is emitting all the output beams of the series of output beams, and to modulate from the closed position to the open position once every output beam from the series of the output beams has reached a predetermined distance from the LIDAR system.

In certain embodiments, the controller component is configured to cause the shutter component to modulate from the open position to the closed position simultaneously with emission of the output beams by the radiation source component.

In certain embodiments, the controller component is further configured to cause the shutter component to modulate from the open position to the closed position at a predetermined time after emission of the output beams by the radiation source component.

In certain embodiments, the controller component is further configured to cause the shutter component to modulate from the open position to the closed position based on a predetermined time interval.

In certain embodiments, the shutter component comprises a mechanical shutter device.

In certain embodiments, the mechanical shutter device comprises a rotatable disk having a plurality of slots defined in a body, the controller component being further configured to cause the disk to rotate at 500kHz.

In certain embodiments, the shutter component comprises one of an electro-optical shutter device and a semi-conducting shutter device.

In certain embodiments, the shutter component comprises semi-transparent elements and is configured to partially block the inner detection pathway.

In certain embodiments, the scanner component comprises at least one of a rotatable prism and a pivotable mirror.

In certain embodiments, the receiver component is a photodetector, and the shutter component is positioned upstream along the inner detection pathway from the photodetector.

From another aspect, there is provided a method for detecting objects in a region of interest of an autonomous vehicle, the method executable by a controller component of a LIDAR system, the controller component communicatively coupled to a shutter component of the LIDAR system, the shutter component being upstream of a receiver component which is configured to receive input beams reflected from objects in the region of interest along an inner detection pathway, the method comprising: determining an emission of output beams by a radiation source component of the LiDAR system towards a scanner component of the LiDAR system, the scanner component being configured to direct the output beams onto the region of interest; causing the shutter component to modulate between a closed position in which the inner detection pathway is at least partially blocked and an open position in which the inner detection pathway is open; wherein: the shutter component is in the closed position while the radiation source component is emitting the output beams, and the shutter component is in the open position to receive the input beams of the given output beams from the region of interest.

In certain embodiments, the controller component causes the shutter component to modulate from the closed position to the open position when the output beams leave an inner emission pathway of the LIDAR system.

In certain embodiments, the controller component causes the shutter component to modulate from the closed position to the open position when the output beams reach a predetermined distance from the LIDAR system.

In certain embodiments, the output beams are emitted as a series of output beams, and the controller component is arranged to cause the shutter component to be in the closed position whilst the beams of the series of output beams are being emitted by the radiation source component, and to modulate from the closed position to the open position once every beam from the series of the output beams has left an inner emission pathway of the LIDAR system.

In certain embodiments, the output beams are emitted as a series of output beams, and the controller component is arranged to cause the shutter component to modulate between the open and closed positions on: emission of a given output beam in the series from the inner emission pathway, and an emission by the radiation source of the next output beam in the series after the given output beam. In other words, the shutter component is caused to open after the given output beam in the series has left the inner emission pathway of the LIDAR system, and caused to close when the next output beam in the series (after the given output beam) is being emitted by the radiation source. The shutter component will then be caused to open when that next output beam has left the inner emission pathway.

In certain embodiments, the output beams are emitted as a series of beams, and the controller component is arranged to cause the shutter component to be in the closed position whilst the beams of the series of output beams are being emitted by the radiation source component, and to modulate from the closed position to the open position once every beam from the series of the beams has reached a predetermined distance from the LIDAR system.

In certain embodiments, the controller component causes the shutter component to modulate between the open position and the closed position based on a predetermined time interval.

In certain embodiments, the controller component is communicatively coupled to the radiation source component, the method comprising the controller component causing the radiation source component to emit the output beams. In certain embodiments, the controller component causes the shutter component to synchronize the modulation of the open and closed positions with the radiation source component emitting the output beams.

In certain embodiments, the controller component is communicatively coupled to the receiver component.

In the context of the present specification, a "radiation source" or "radiation source component" broadly refers to any device configured to emit radiation such as a radiation signal in the form of a beam. A radiation source component includes but is not limited to a light source configured to emit light beams. The light source may be a laser such as a solid-state laser, laser diode, a high-power laser, or an alternative light source such as, a light emitting diode (LED)-based light source. Some (non-limiting) examples of the light source are Fabry-Perot laser diode, a quantum well laser, a distributed Bragg reflector (DBR) laser, a distributed feedback (DFB) laser, a fiber-laser, or a vertical-cavity surface-emitting laser (VCSEL). In addition, the light source may emit light beams in differing formats, such as light pulses, continuous wave (CW), quasi-CW, and so on. In some non-limiting examples, the light source may include a laser diode configured to emit light at a wavelength between about 650 nm and 1150 nm. Alternatively, the light source may include a laser diode configured to emit light beams at a wavelength between about 800 nm and about 1000 nm, between about 850 nm and about 950 nm, between about 1300 nm and about 1600 nm, or in between any other suitable range. Unless indicated otherwise, the term "about" with regard to a numeric value is defined as a variance of up to 10% with respect to the stated value.

In the context of the present specification, an "output beam" may be referred to as a radiation beam, such as a light beam, that is generated by the radiation source component and is directed downrange towards a region of interest. The output beam may have one or more parameters such as: beam duration, beam angular dispersion, wavelength, instantaneous power, photon density at different distances from the radiation (light) source, average power, beam power intensity, beam width, beam repetition rate, beam sequence, pulse duty cycle, wavelength, or phase etc. The output beam may be unpolarized or randomly polarized, may have no specific or fixed polarization (e.g., the polarization may vary with time), or may have a particular polarization (e.g., linear polarization, elliptical polarization, or circular polarization).

Further, in the context of the present specification, the output beam may also be referred to as a continuous (electromagnetic) wave having particular characteristics, such as a frequency, an amplitude, a phase, and a wavelength, having been emitted by the radiation source.

In the context of the present specification, an "input beam" may also be referred to as a radiation beam, such as a light beam, reflected from one or more objects in a region of interest (ROI). By reflected is meant that at least a portion of the output beam incident on one or more objects in the ROI, bounces off the one or more objects. The input beam may have one or more parameters such as: time-of-flight (i.e., time from emission until detection), instantaneous power (e.g., power signature), average power across entire return pulse, and photon distribution/signal over return pulse period etc.

In the context of the present specification, a "region of interest" may broadly include a portion of the observable environment of LiDAR system in which the one or more objects may be detected. It is noted that the region of interest of the LiDAR system may be affected by various conditions such as but not limited to: an orientation of the LiDAR system (e.g. direction of an optical axis of the LiDAR system); a position of the LiDAR system with respect to the environment (e.g. distance above ground and adjacent topography and obstacles); operational parameters of the LiDAR system (e.g. emission power, computational settings, defined angles of operation), etc. The ROI of LiDAR system may be defined, for example, by a plane angle or a solid angle. In one example, the ROI may also be defined within a certain range (e.g. up to 200 m or so).

In the context of the present specification, a "server" is a computer program that runs on appropriate hardware and is capable of receiving requests (e.g. from electronic devices) over a network, and carrying out those requests, or causing those requests to be carried out. The hardware may be implemented as one physical computer or one physical computer system, but neither is required to be the case with respect to the present technology. In the present context, the use of the expression a "server" is not intended to mean that every task (e.g. received instructions or requests) or any particular task will have been received, carried out, or caused to be carried out, by the same server (i.e. the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, "electronic device" is any computer hardware that is capable of running software appropriate to the relevant task at hand. In the context of the present specification, the term "electronic device" implies that a device can function as a server for other electronic devices, however it is not required to be the case with respect to the present technology. Thus, some (non-limiting) examples of electronic devices include self-driving unit, personal computers (desktops, laptops, netbooks, etc.), smart phones, and tablets, as well as network equipment such as routers, switches, and gateways. It should be understood that in the present context the fact that the device functions as an electronic device does not mean that it cannot function as a server for other electronic devices.

In the context of the present specification, the expression "information" includes information of any nature or kind whatsoever capable of being stored in a database. Thus information includes, but is not limited to visual works (e.g. maps), audiovisual works (e.g. images, movies, sound records, presentations etc.), data (e.g. location data, weather data, traffic data, numerical data, etc.), text (e.g. opinions, comments, questions, messages, etc.), documents, spreadsheets, etc.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the words "first", "second", "third", etc. have been used as adjectives only for the purpose of allowing for distinction between the nouns that they modify from one another, and not for the purpose of describing any particular relationship between those nouns. Further, as is discussed herein in other contexts, reference to a "first" element and a "second" element does not preclude the two elements from being the same actual real-world element.

Implementations of the present technology each have at least one of the above-mentioned objects and/or aspects, but do not necessarily have all of them. It should be understood that some aspects of the present technology that have resulted from attempting to attain the above- mentioned object may not satisfy this object and/or may satisfy other objects not specifically recited herein.

Additional and/or alternative features, aspects and advantages of implementations of the present technology will become apparent from the following description, the accompanying drawings and the appended claims.

**BRIEF DESCRIPTION OF THE DRAWINGS**

These and other features, aspects and advantages of the present technology will become better understood with regard to the following description, appended claims and accompanying drawings where:

Figure 1 depicts a schematic diagram of an example computer system for implementing certain non-limiting embodiments of systems and/or methods of the present technology;

Figure 2 depicts a networked computing environment suitable for use with certain non-limiting embodiments of the present technology;

Figure 3 depicts a schematic diagram of an example LiDAR system for implementing certain non-limiting embodiments of systems and/or methods of the present technology;

Figure 4 depicts a shutter component of the example LiDAR system of Figure 3, in accordance with certain non-limiting embodiments of the present technology;

Figure 5 depicts a representation of the shutter component of Figure 4 and a receiver component of the LiDAR system of Figure 3 when the shutter component is in an open position, in accordance with certain non-limiting embodiments of the present technology;

Figure 6 depicts a representation of the shutter component of Figure 4 and a receiver component of the LiDAR system of Figure 3 when the shutter component is in a closed position, in accordance with certain non-limiting embodiments of the present technology;

Figure 7 depicts a light intensity reaching the receiver component of Figures 5 and 6 when the shutter component is in open and closed positions, in accordance with certain non-limiting embodiments of the present technology;

Figure 8 depicts a light intensity reaching the receiver component of Figures 5 and 6 when the shutter component is in open and closed positions, in accordance with certain other non-limiting embodiments of the present technology;

Figure 9 depicts a schematic diagram of a method for detecting an object located in the surroundings of the vehicle present in the network computing environment of Figure 2 based on data obtained by the LiDAR system of Figure 3, in accordance with certain non-limiting embodiments of the present technology;

Figure 10 is a timeline representation of closed and open positions of the shutter component of Figures 5 and 6, in accordance with certain non-limiting embodiments of the present technology;

Figure 11 is a schematic diagram of the example LiDAR system of Figure 3 and indicating an inner emission pathway and an output beam leaving the inner emission pathway, in accordance with certain non-limiting embodiments of the present technology.

**DETAILED DESCRIPTION**

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor", may be provided using dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

With these fundamentals in place, we will now consider some non-limiting examples to illustrate various implementations of aspects of the present technology.

## Computer system

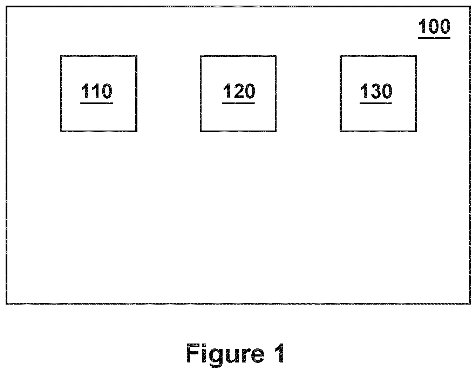

Referring initially to Figure 1, there is depicted a schematic diagram of a computer system 100 suitable for use with some implementations of the present technology, the computer system 100 comprising various hardware components including one or more single or multi-core processors collectively represented by processor 110, a solid-state drive 120, a memory 130, which may be a random-access memory or any other type of memory.

Communication between the various components of the computer system 100 may be enabled by one or more internal and/or external buses (not shown) (e.g. a PCI bus, universal serial bus, IEEE 1394 "Firewire" bus, SCSI bus, Serial-ATA bus, etc.), to which the various hardware components are electronically coupled. According to embodiments of the present technology, the solid-state drive 120 stores program instructions suitable for being loaded into the memory 130 and executed by the processor 110 for determining a presence of an object. For example, the program instructions may be part of a vehicle control application executable by the processor 110. It is noted that the computer system 100 may have additional and/or optional components (not depicted), such as network communication modules, localization modules, and the like.

## Networked computer environment

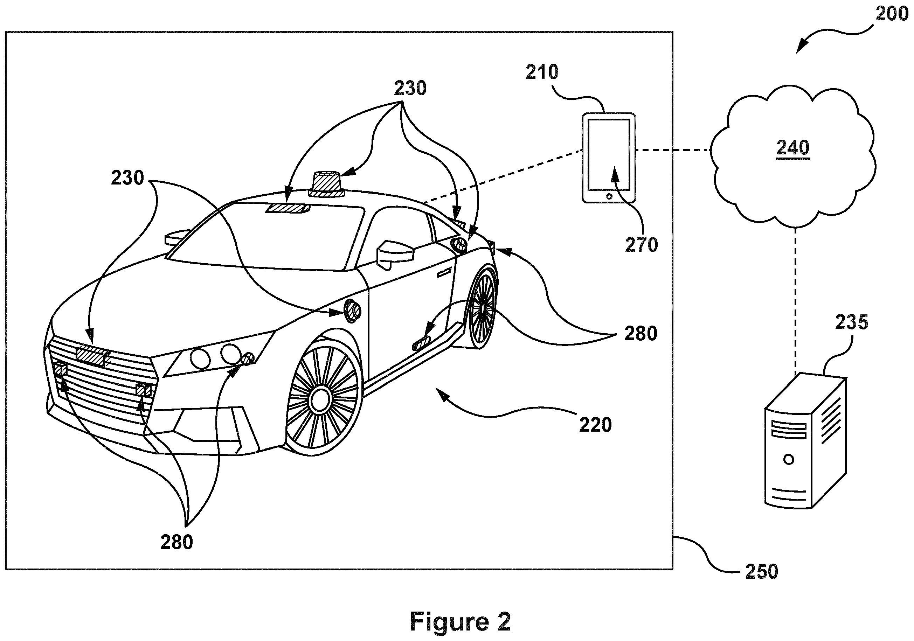

Figure 2 depicts a schematic diagram of a networked computer environment 200 suitable for use with some embodiments of the systems and/or methods of the present technology. The networked computer environment 200 comprises an electronic device 210 associated with a vehicle 220, and/or associated with a user (not depicted) who is associated with the vehicle 220, such as an operator of the vehicle 220, a server 235 in communication with the electronic device 210 via a communication network 240 (e.g. the Internet or the like, as will be described in greater detail herein below).

Optionally, the networked computer environment 200 can also include a GPS satellite (not depicted) transmitting and/or receiving a GPS signal to/from the electronic device 210. It will be understood that the present technology is not limited to GPS and may employ a positioning technology other than GPS. It should be noted that the GPS satellite can be omitted altogether.

The vehicle 220 to which the electronic device 210 is associated may comprise any transportation vehicle, for leisure or otherwise, such as a private or commercial car, truck, motorbike or the like. Although the vehicle 220 is depicted as being a land vehicle, this may not be the case in each embodiment of the present technology. For example, the vehicle 220 may be a watercraft, such as a boat, or an aircraft, such as a flying drone.

The vehicle 220 may be user operated or a driver-less vehicle. In at least some embodiments of the present technology, it is contemplated that the vehicle 220 may be implemented as a Self-Driving Car (SDC). It should be noted that specific parameters of the vehicle 220 are not limiting, these specific parameters including: vehicle manufacturer, vehicle model, vehicle year of manufacture, vehicle weight, vehicle dimensions, vehicle weight distribution, vehicle surface area, vehicle height, drive train type (e.g. 2x or 4x), tire type, brake system, fuel system, mileage, vehicle identification number, and engine size.

The implementation of the electronic device 210 is not particularly limited, but as an example, the electronic device 210 may be implemented as a vehicle engine control unit, a vehicle CPU, a vehicle navigation device (e.g. TomTom™, Garmin™), a tablet, a personal computer built into the vehicle 220, and the like. Thus, it should be noted that the electronic device 210 may or may not be permanently associated with the vehicle 220. Additionally or alternatively, the electronic device 210 can be implemented in a wireless communication device such as a mobile telephone (e.g. a smart-phone or a radio-phone). In certain embodiments, the electronic device 210 has a display 270.

The electronic device 210 may comprise some or all of the components of the computer system 100 depicted in Figure 1. In certain embodiments, the electronic device 210 is an on-board computer device and comprises the processor 110, the solid-state drive 120 and the memory 130. In other words, the electronic device 210 comprises hardware and/or software and/or firmware, or a combination thereof, for processing data as will be described in greater detail below.

In some embodiments of the present technology, the communication network 240 is the Internet. In alternative non-limiting embodiments, the communication network 240 can be implemented as any suitable local area network (LAN), wide area network (WAN), a private communication network or the like. It should be expressly understood that implementations for the communication network 240 are for illustration purposes only. A communication link (not separately numbered) is provided between the electronic device 210 and the communication network 240, the implementation of which will depend *inter alia* on how the electronic device 210 is implemented. Merely as an example and not as a limitation, in those embodiments of the present technology where the electronic device 210 is implemented as a wireless communication device such as a smartphone or a navigation device, the communication link can be implemented as a wireless communication link. Examples of wireless communication links include, but are not limited to, a 3G communication network link, a 4G communication network link, and the like. The communication network 240 may also use a wireless connection with the server 235.

In some embodiments of the present technology, the server 235 is implemented as a computer server and may comprise some or all of the components of the computer system 100 of Figure 1. In one non-limiting example, the server 235 is implemented as a Dell™ PowerEdge™ Server running the Microsoft™ Windows Server™ operating system but can also be implemented in any other suitable hardware, software, and/or firmware, or a combination thereof. In the depicted non-limiting embodiments of the present technology, the server is a single server. In alternative non-limiting embodiments of the present technology (not shown), the functionality of the server 235 may be distributed and may be implemented via multiple servers.

In some non-limiting embodiments of the present technology, the processor 110 of the electronic device 210 can be in communication with the server 235 to receive one or more updates. The updates can be, but are not limited to, software updates, map updates, routes updates, weather updates, and the like. In some embodiments of the present technology, the processor 110 can also be configured to transmit to the server 235 certain operational data, such as routes travelled, traffic data, performance data, and the like. Some or all data transmitted between the vehicle 220 and the server 235 may be encrypted and/or anonymized.

It should be noted that a variety of sensors and systems may be used by the electronic device 210 for gathering information about surroundings 250 of the vehicle 220. As seen in Figure 2, the vehicle 220 may be equipped with a plurality of sensor systems 280. It should be noted that different sensor systems from the plurality of sensor systems 280 may be used for gathering different types of data regarding the surroundings 250 of the vehicle 220.

In one example, the plurality of sensor systems 280 may comprise one or more camera-type sensor systems that are mounted to the vehicle 220 and communicatively coupled to the processor 110. Broadly speaking, the one or more camera-type sensor systems may be configured to gather image data about various portions of the surroundings 250 of the vehicle 220. In some cases, the image data provided by the one or more camera-type sensor systems may be used by the electronic device 210 for performing object detection procedures. For example, the electronic device 210 may be configured to feed the image data provided by the one or more camera-type sensor systems to an Object Detection Neural Network (ODNN) that has been trained to localize and classify potential objects in the surroundings 250 of the vehicle 220.

In another example, the plurality of sensor systems 280 may comprise one or more radar-type sensor systems that are mounted to the vehicle 220 and communicatively coupled to the processor 110. Broadly speaking, the one or more radar-type sensor systems may be configured to make use of radio waves to gather data about various portions of the surroundings 250 of the vehicle 220. For example, the one or more radar-type sensor systems may be configured to gather radar data about potential objects in the surroundings 250 of the vehicle 220 and which data may be representative of distance of objects from the radar-type sensor system, orientation of objects, velocity and/or speed of objects, and the like.

It should be noted that the plurality of sensor systems 280 may comprise additional types of sensor systems to those non-exhaustively described above and without departing from the scope of the present technology.

Furthermore, the vehicle 220 is equipped with one or more Light Detection and Ranging (LiDAR) systems for gathering information about surroundings 250 of the vehicle 220. The LiDAR systems may be in addition to, or in some cases instead of, the plurality of sensor systems 280. A given LiDAR system 230 from the one or more LiDAR systems may be mounted, or retrofitted, to the vehicle 220 in a variety of locations and/or in a variety of configurations.

For example, a given LiDAR system 230 may be mounted on an interior, upper portion of a windshield of the vehicle 220. Nevertheless, as illustrated in Figure 2, other locations for mounting the given LiDAR system 230 are within the scope of the present technology, including on a back window, side windows, front hood, rooftop, front grill, front bumper or the side of the vehicle 220. In some cases, the given LiDAR system 230 can even be mounted in a dedicated enclosure mounted on the top of the vehicle 220.

As mentioned above, the LiDAR system 230 may also be mounted in a variety of configurations.

In one embodiment, such as that of Figure 2, the given LiDAR system 230 of the one or more LiDAR systems is mounted to the rooftop of the vehicle 220 in a rotatable configuration. For example, the given LiDAR system 230 mounted to the vehicle 220 in a rotatable configuration may comprise at least some components that are rotatable 360 degrees about an axis of rotation of the given LiDAR system 230. It should be noted that the given LiDAR system 230 mounted in rotatable configurations may gather data about most of the portions of the surroundings 250 of the vehicle 220.

In another embodiment, such as that of Figure 2, the given LiDAR system 230 of the one or more LiDAR systems is mounted to the side, or the front grill, for example, in a non-rotatable configuration. For example, the given LiDAR system 230 mounted to the vehicle 220 in a non-rotatable configuration may comprise at least some components that are not rotatable 360 degrees and are configured to gather data about pre-determined portions of the surroundings 250 of the vehicle 220.

Irrespective of the specific location and/or the specific configuration of the given LiDAR system 230, the LiDAR system 230 is configured to capture data about the surroundings 250 of the vehicle 220 for building a multi-dimensional map of objects in the surroundings 250 of the vehicle 220. How the given LiDAR system 230 is configured to capture data about the surroundings 250 of the vehicle 220 will now be described.

## LiDAR System

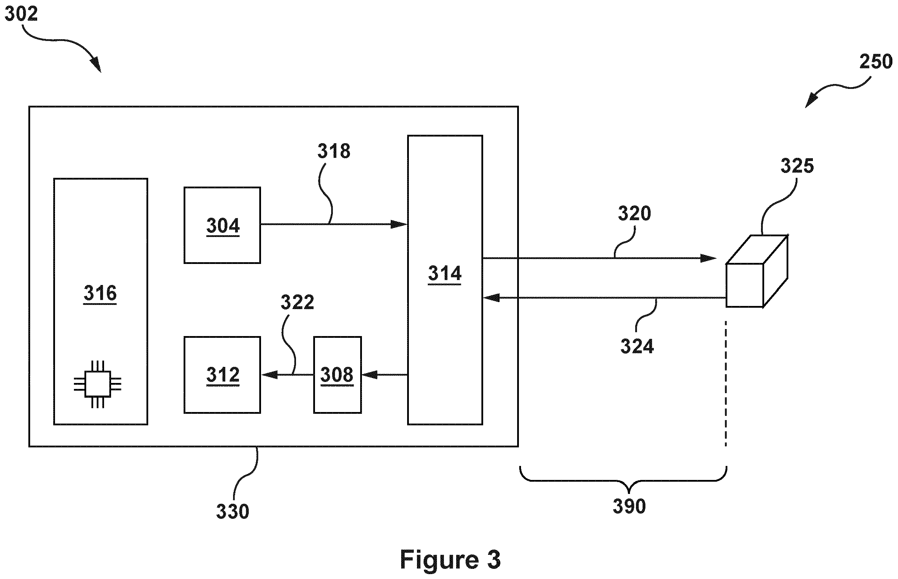

With reference to Figure 3, there is depicted a schematic diagram of a non-limiting example of a LiDAR system 302. It should be noted that the LiDAR system 230 (present in the network computer environment depicted in Figure 2) may be implemented in a similar manner to the implementation of the LiDAR system 302.

Broadly speaking, the LiDAR system 302 is configured to detect objects within a defined distance. In certain embodiments, the defined distance is within a proximity of the vehicle. Developers have noted that detection of objects within close proximity of vehicles may be hampered by self-reflection within the LiDAR system, occurring when optical elements reflect an output beam back within the LIDAR system. The light reflected from the close objects reaches LiDAR system quickly and can be intercepted by the output beam reflected from the inner optics of the LiDAR system. Embodiments of the present technology are therefore directed to reducing or avoiding self-reflection within the LiDAR system.

According to certain non-limiting embodiments of the present technology, the LiDAR system 302 may comprise a variety of internal components such as, but not limited to: (i) a radiation source component 304 for emitting radiation, such as an output beam 320; (ii) a scanner component 314 for directing the output beam 320 to the surroundings 250, (iii) a receiver component 312 (also referred to herein as a "detection system" or a "detector") for detecting reflected light, such as from the object 325, as an input beam 324, (iv) a shutter component 308 for modulating the transmission of the input beam 324 to the receiver component 312, and (iv) a controller component 316 for controlling an operation of one or more of the radiation source component 304, the scanner component 314, the receiver component 312, and the shutter component 308.

It is contemplated that in addition to the internal components non-exhaustively listed above, the LiDAR system 302 may further comprise a variety of sensors (such as, for example, a temperature sensor, a moisture sensor, etc.) which are omitted from Figure 3 for the sake of clarity.

In certain non-limiting embodiments of the present technology, one or more of the internal components of the LiDAR system 302 may be implemented in a common housing 330 as depicted in Figure 3. In other non-limiting embodiments of the present technology, at least the controller component 316 may be located outside of the common housing 330, and optionally remotely thereto.

In operation, the LiDAR system 302 is arranged to generate a multi-dimensional map of the surroundings 250 around the vehicle 220 including any objects, such as the object 325. This is generally obtained by emitting radiation into the surrounding area as the output beam 320 and detecting reflected light, such as from the object 325, as the input beam 324. By modulating an access of light to the receiver component 312 using the shutter component 308, self-reflection can be reduced or avoided in certain embodiments.

## Radiation Source Component

According to the non-limiting embodiments of the present technology, the radiation source component 304 is communicatively coupled to a controller, such as the controller component 316, and is configured to emit radiation, such as a radiation signal in the form of a beam such as the output beam 320. In certain embodiments, the radiation source component 304 is configured to emit light and is referred to interchangeably as a light source component 304. It is contemplated that the output beam 320 may have any suitable form such as continuous-wave or pulsed.

The radiation source component 304 comprises, in certain embodiments, one or more lasers that emit light having a particular operating wavelength. The operating wavelength of the radiation source component 304 may be in the infrared, visible, and/or ultraviolet portions of the electromagnetic spectrum. For example, the radiation source component 304 may include one or more lasers with an operating wavelength between about 650 nm and 1150 nm. Alternatively, the light source may include a laser diode configured to emit light at a wavelength between about 800 nm and about 1000 nm, between about 850 nm and about 950 nm, or between about 1300 nm and about 1600 nm. However, it should be noted that the radiation source component 304 may include lasers with different operating wavelengths, without departing from the scope of the present technology. In certain other embodiments, the radiation source component 304 comprises a light emitting diode (LED).

It is contemplated that the LiDAR system 302 may comprise an eye-safe laser, or put another way, the LiDAR system 302 may be classified as an eye-safe laser system or laser product. Broadly speaking, an eye-safe laser, laser system, or laser product may be a system with some or all of: an emission wavelength, average power, peak power, peak intensity, pulse energy, beam size, beam divergence, exposure time, or scanned output beam such that emitted light from this system presents little or no possibility of causing damage to a person's eyes.

As previously alluded to, the radiation source component 304 may include one or more pulsed lasers configured to produce, emit, or radiate pulses of light with certain pulse duration. For example, the radiation source component 304 may be configured to emit pulses with a pulse duration (e.g., pulse width) ranging from 10 ps to 100 ns. In another example, the radiation source component 304 may emit pulses at a pulse repetition frequency of approximately 100 kHz to 5 MHz or a pulse period (e.g., a time between consecutive pulses) of approximately 200 ns to 10 μs. Overall, however, the radiation source component 304 can generate the output beam 320 with any suitable average optical power, and the output beam 320 may include optical pulses with any suitable pulse energy or peak optical power for a given application.

In some embodiments, the radiation source component 304 may comprise one or more laser diodes, such as but not limited to: Fabry-Perot laser diode, a quantum well laser, a distributed Bragg reflector (DBR) laser, a distributed feedback (DFB) laser, or a vertical-cavity surface-emitting laser (VCSEL). Just as examples, a given laser diode operating in the radiation source component 304 may be an aluminum-gallium-arsenide (Al-GaAs) laser diode, an indium-gallium-arsenide (InGaAs) laser diode, or an indium-gallium-arsenide-phosphide (InGaAsP) laser diode, or any other suitable laser diode. It is also contemplated that the radiation source component 304 may include one or more laser diodes that are current-modulated to produce optical pulses.

In some embodiments, the output beam 320 emitted by the radiation source component 304 is a collimated optical beam with any suitable beam divergence for a given application. Broadly speaking, divergence of the output beam 320 is an angular measure of an increase in beam size (e.g., a beam radius or beam diameter) as the output beam 320 travels away from the radiation source component 304 or the LiDAR system 302. In some embodiments, the output beam 320 may have a substantially circular cross section.

It is also contemplated that the output beam 320 emitted by radiation source component 304 may be unpolarized or randomly polarized, may have no specific or fixed polarization (e.g., the polarization may vary with time), or may have a particular polarization (e.g., the output beam 320 may be linearly polarized, elliptically polarized, or circularly polarized).

In at least some embodiments, the output beam 320 and the input beam 324 may be substantially coaxial. In other words, the output beam 320 and input beam 324 may at least partially overlap or share a common propagation axis, so that the input beam 324 and the output beam 322 travel along substantially the same optical path (albeit in opposite directions). Nevertheless, in other embodiments, it is contemplated that the output beam 320 and the input beam 324 may not be coaxial, or in other words, may not overlap or share a common propagation axis inside the LiDAR system 302, without departing from the scope of the present technology.

It should be noted that in at least some embodiments of the present technology, the radiation source component 304 may be rotatable, such as by 360 degrees or less, about the axis of rotation (not depicted) of the LiDAR system 302 when the LiDAR system 302 is implemented in a rotatable configuration. However, in other embodiments, the radiation source component 304 may be stationary even when the LiDAR system 302 is implemented in a rotatable configuration, without departing from the scope of the present technology.

It should be expressly understood that the radiation source component 304 may further include other components, which are omitted in Figure 3 for the sake of clarity, that may include, without being limited to, optical components, such as lenses, prisms, mirrors, collimators, polarizers, and the like.

As illustrated in Figure 3, the output beam 320 exits the LiDAR system 302 and is directed downrange towards the surroundings 250. Let it be assumed that the object 325 is located at a distance 390 from the LiDAR system 302. Once the output beam 320 reaches the object 325, the object 325 may reflect at least a portion of light from the output beam 320, and some of the reflected light beams may return back towards the LiDAR system 302 in a form of the input beam 324. By reflecting, it is meant that at least a portion of the light beam from the output beam 320 bounces off the object 325. Another portion of the light beam from the output beam 320 may be absorbed by the object 325. It should be noted that, in some cases, the input beam 324 may contain only a relatively small fraction of the light from the output beam 320. It should also be noted that an angle of the input beam 324 relative to a surface of the object 325 ("angle of incidence") may be the same or different than an angle of the output beam 320 relative to surface of the object 325 ("angle of reflection").

Accordingly, the input beam 324 is captured by the LiDAR system 302 via the receiver component 312. Finally, by measuring a time between emitting the output beam 320 and receiving the input beam 324, the distance 390 to the object 325 may be calculated, for example, by the controller component 316.

As schematically illustrated in Figure 3, the LiDAR system 302 may make use of a given internal beam path, from a plurality of potential internal (inner) pathways for example, for transmitting the output beam 320 generated by the radiation source component 304 towards the surroundings 250. The LiDAR system 302 may also make use of another internal (inner) beam path, form a plurality of potential internal pathways for example, for transmitting the input beam 325to the receiver component 312. The internal (inner) beam path for transmitting the output beam 320 to the surroundings 250 is hereinafter referred to as an inner emission pathway 318. The internal (inner) beam path for transmitting the input beam 324 to the receiver component 312 is hereinafter referred to as an inner detection pathway 322.

In one example, the inner emission pathway 318 may allow providing the output beam 320 from the radiation source component 304 to the scanner component 314, before it is emitted to the surroundings 250. The inner detection pathway 322 may allow providing the input beam 324 from the scanner component 314 to the receiver component 312 via the scanner.

In other embodiments, the LiDAR system 302 may make use of another inner emission pathway 318 for providing the output beam 320 to the scanner component 314. In one example, the another inner emission pathway 318 may allow providing the output beam 320 from the radiation source component 304 to the scanner component 314, via a beam splitter component (not shown) or a MEM component (not shown), for example. In other embodiments, the inner detection pathway 322 may allow providing the input beam 324 to the receiver component 312 without passing through the scanner component 314.

It should be noted that the inner emission pathway 318 and/or the inner detection pathway 322 may comprise one or more optical components, such as for conditioning, shaping, focussing, filtering, modifying, steering, or directing the output beam 320 and/or the input beam 324. For example, the LiDAR system 302 may include one or more lenses, mirrors, filters (e.g., band pass or interference filters), optical fibers, circulators, beam splitters, polarizers, polarizing beam splitters, wave plates (e.g., half-wave or quarter-wave plates), diffractive elements, microelectromechanical (MEM) elements, collimating elements, or holographic elements. In certain embodiments, the LiDAR system 302 may include a beam splitter component for splitting a light beam emitted from the radiation source component 304 into at least two components of lesser intensity. For example, in some embodiments, one or both of the inner detection pathway 322 and the inner emission pathway 318 may be implemented as one or more optical fibers.

It is contemplated that in at least some embodiments, the inner emission pathway 318 and the inner detection pathway 322 may share at least some common optical components.

## Scanner Component

Generally speaking, the scanner component 314 steers the output beam 320 in one or more directions towards the surroundings 250. The scanner component 314 may comprise one or more optical components and/or mechanical-type components for performing the scanning of the output beam 320. For example, the scanner component 314 may include one or more mirrors, prisms, lenses, MEM components, piezoelectric components, optical fibers, splitters, diffractive elements, collimating elements, and the like. It should be noted that the scanner component 314 may also include one or more actuators (not separately depicted) driving at least some optical components to rotate, tilt, pivot, or move in an angular manner about one or more axes, for example. In certain embodiments, the scanner component 314 comprises one of a rotatable prism and a pivotable mirror.

Further, the scanner component 314 may be configured to scan the output beam 320 over a variety of horizontal angular ranges and/or vertical angular ranges. In other words, the scanner component 314 may be instrumental in providing the LiDAR system 302 with a desired Region of Interest (ROI, not separately depicted). The ROI of the LiDAR system 302 may refer to an area, a volume, a region, an angular range, and/or portion(s) of the surroundings 250 about which the LiDAR system 302 may be configured to scan and/or can capture data.

The scanner component 314 may be communicatively coupled to the controller component 316. As such, the controller component 316 may be configured to control the scanner component 314 so as to guide the output beam 320 in a desired direction downrange and/or along a desired scan pattern. Broadly speaking, a scan pattern may refer to a pattern or path along which the output beam 320 is directed by the scanner component 314 during operation.

In operation, in certain embodiments, a beam of light emitted by the radiation source component 304 is received by the scanner component 314 and is further directed to the surroundings 250. The scanner component 314 is configured to scan across the ROI of the LiDAR system 302 in accordance with the scan pattern.

## Receiver Component

According to the non-limiting embodiments of the present technology, the receiver component 312 (also referred to herein as a "detector") is communicatively coupled to the controller component 316 and may be implemented in a variety of ways. Broadly speaking, the receiver component 312 is an optoelectronic device configurable, by the controller component 316, to convert an optical signal (such as the input beam 324) into a respective electrical signal (current and/or voltage). To that end, the receiver component 312 may comprise, for example, one or more of a photoreceiver, optical receiver, optical sensor, detector, photodetector, optical detector, optical fibers, and the like.

The receiver component 312 receives or detects photons from the input beam 324 and generates one or more representative data signals (electrical signals, for example). The receiver component 312 may also provide the so-generated electrical signal to the controller component 316 for further processing. In this regard, according to non-limiting embodiments of the present technology, the receiver component 312 may be configured to convert the input beam 324 into an input electrical signal. Further, the receiver component 312 may be configured to send the so generated input electrical signal to the controller component 316 for further analysis or processing.

According to some non-limiting embodiments of the present technology, the receiver component 312 may further comprise at least two inputs so as to be configured to receive at least another optical signal, aside from the input beam 324.

Thus, according to some non-limiting embodiments of the present technology, the receiver component 312 may be configured to perform one or more of the following functions: (1) receive the input beam 324; (2) convert the input beam 324 into the input electrical signal; and (3) transmit the input electrical signal to the controller component 316 for analyzing certain characteristics thereof, thereby determining the data of the object 325.

It is contemplated that the receiver component 312 may be implemented with one or more avalanche photodiodes (APDs), one or more single-photon avalanche diodes (SPADs), one or more PN photodiodes (e.g., a photodiode structure formed by a p-type semiconductor and a n-type semiconductor), one or more PIN photodiodes (e.g., a photodiode structure formed by an undoped intrinsic semiconductor region located between p-type and n-type regions), and the like. In some embodiments, the receiver component 312 may be implemented as an array of photodiodes.

In some non-limiting embodiments, the receiver component 312 may also comprise circuitry that performs signal amplification, sampling, filtering, signal conditioning, analog-to-digital conversion, time-to-digital conversion, pulse detection, threshold detection, rising-edge detection, falling-edge detection, and the like. For example, the receiver component 312 may include electronic components configured to convert a received photocurrent (e.g., a current produced by an APD in response to a received optical signal) into a voltage signal.

In certain non-limiting embodiments of the present technology, the receiver component 312 is a coherent receiver component. In other words, the receiver component 312 may be configured, by the controller component 316, to receive the input beam 324 only if it is coherent with the output beam 320, that is at least one of phase differences, frequencies, and waveforms respectively associated therewith are substantially identical and constant in time.

In some non-limiting embodiments of the present technology, the receiver component 312 and the controller component 316 may be implemented as an integral component of the LiDAR system 302, enclosed in a separate housing (not separately depicted), thereby providing for receiving incoming light beams, generating respective electrical signal and determining, based on analyzing the respective electrical signals, the data of the object 325.

## Shutter component

The shutter component 308 is positioned upstream of the receiver component 312. The shutter component 308 is configured to selectively open and close the inner detection pathway 322 in order to modulate light transmission to the receiver component 312.

In this respect, the shutter component 308 is configured to modulate between a closed position and an open position. In the closed position, the inner detection pathway 322 is at least partially blocked. In other words, light such as the input beam 324 is not able to be fully transmitted to the receiver component 312. The shutter component 308 is configured to fully or partially block light, such as the input beam 324, in the closed position. In the open position, the inner detection pathway 322 is not blocked and the input beam 324 can be fully transmitted to the receiver component 312.

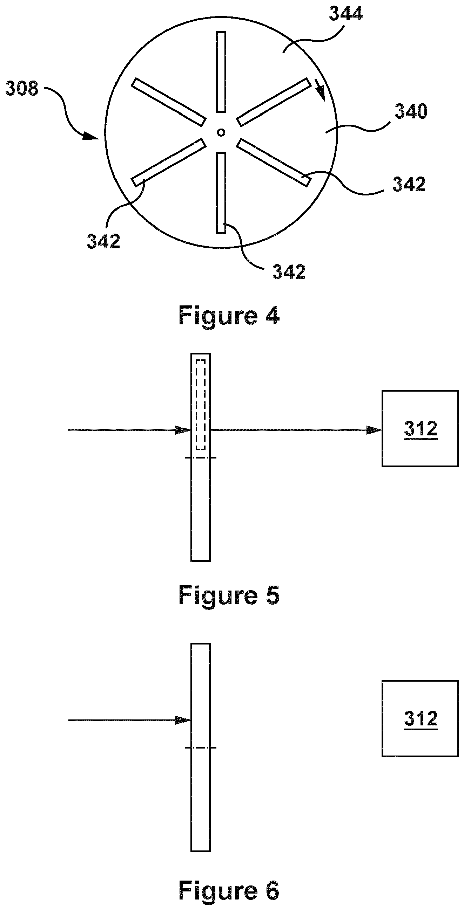

With reference to Figure 4, in certain embodiments, the shutter component 308 comprises a mechanical shutter device. In certain implementations, the mechanical shutter device is a rotatable disk 340 having a plurality of slots 342 defined in a body 344. The slots extend radially from a central position. The body 344 of the mechanical shutter device is configured to block light transmission, and the slots 342 are configured to permit light transmission.

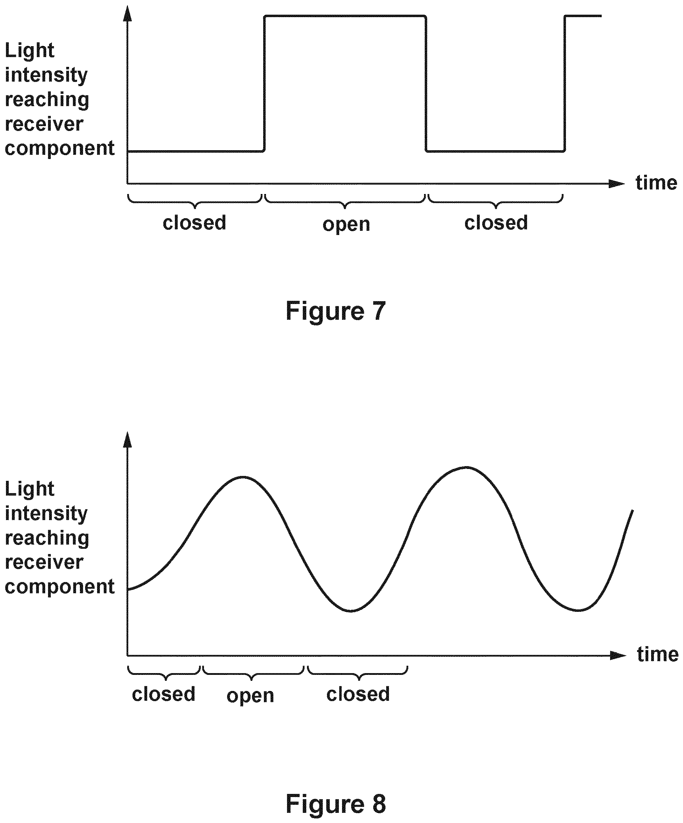

In use, the rotatable disk is positioned transverse to the inner detection pathway 322. As the rotatable disk is caused to rotate, either a given slot, or the body is aligned with the inner detection pathway to selectively modulate between the open and closed positions respectively (Figures 5 and 6). The cycling through the open and closed positions in terms of a light intensity reaching the receiver component 312 over time is illustrated in Figure 7.

In certain embodiments, the body 344 is configured to permit partial transmission of light. In this respect, the light intensity reaching the receiver component 312 over time is illustrated in Figure 8.

Rotation of the mechanical shutter device is controlled by the controller component 316. A speed of rotation is determined based on a desired time interval of the open position and the closed position. This in turn is determined based on the light transmission through the inner emission pathway to the surroundings, in a manner that will be described below.

In certain embodiments, the mechanical shutter device is caused to rotate at about 500 kHz.

Other embodiments of the shutter component 308 are also envisaged and within the scope of the present technology such as a device having a single aperture which is selectively closed and opened to block and permit transmission of light.

In certain other embodiments, the shutter component is an electro-optical shutter. An example of such a shutter component comprises a liquid crystal between crossed polarizers which, with an applied voltage, can switch between the open position and the closed position.

In yet other embodiments, the shutter component is a semi-conductor device having an ambipolar device overlaid with a photoactive semiconducting material. Applying a voltage can switch the shutter component 308 between the open position and the closed position.

**Controller Component**

In the non-limiting embodiments of the present technology, the controller component 316 may include one or more processors, an application-specific integrated circuit (ASIC), a field-programmable gate array (FPGA), and/or other suitable circuitry. The controller component 316 may also include non-transitory computer-readable memory to store instructions executable by the controller component 316 as well as data, which the controller component 316 may produce based on the signals acquired from other internal components of the LiDAR system 302 and/or may provide signals to the other internal components of the LiDAR system 302. The memory can include volatile (e.g., RAM) and/or non-volatile (e.g., flash memory, a hard disk) components. The controller component 316 may be configured to generate data during operation and store it in the memory. For example, this data generated by the controller component 316 may be indicative of the data points in the point cloud of the LiDAR system 302.

It is contemplated that in at least some non-limiting embodiments of the present technology, the controller component 316 may be implemented in a similar manner to the electronic device 210 and/or the computer system 100, without departing from the scope of the present technology.

In addition to collecting data from the receiver component 312, the controller component 316 may also be configured to provide control signals to, and potentially receive diagnostics data from, the radiation source component 304 and the scanner component 314.

As previously stated, the controller component 316 is communicatively coupled to one or more of the radiation source component 304, the scanner component 314, the receiver component 312, and the shutter component 308. According to non-limiting embodiments of the present technology, the controller component 316 may further provide instructions, a control signal, and/or a trigger signal to the radiation source component 304.

Just as an example, the controller component 316 may be configured to monitor a transmission of the output beam 320 through the inner emission pathway 318 and out to the surroundings 250, as well as a timing of the open and closed positions of the shutter component 308 based on the output beam 320 transmission. Alternatively, the controller component 316 may be configured to coordinate the open and closed positions of the shutter component 308 based on an operation of the radiation source component 304.

It is also contemplated that, the controller component 316 may cause the radiation source component 304 to adjust one or more characteristics of the light emission produced by the radiation source component 304 such as, but not limited to: frequency, period, duration, output power, and wavelength of the output beam 320.

As previously mentioned, the controller component 316 may be further configured to determine the data of the object 325 captured, by the radiation source component 304, in the surroundings 250 of the vehicle 220.

In some non-limiting embodiments of the present technology, the object 325 may comprise a static object, such as a traffic light, a pylon, a stopped vehicle, and the like. In other non-limiting embodiments of the present technology, the object 325 may comprise a dynamic object, such as a moving vehicle, a cyclist, a pedestrian, an animal, and the like.

Thus, according to the non-limiting embodiments of the present technology, the data of the object 325 may include at least the distance 390 thereto from the LiDAR system 302, and an instantaneous speed 327 thereof relative to the LiDAR system 302, as an example.

Just as an example, the controller component 316 may be configured to send an electrical trigger signal that includes electrical pulses, so that the radiation source component 304 emits an optical pulse in response to each electrical pulse of the electrical trigger signal. It is also contemplated that, the controller component 316 may cause the radiation source component 304 to adjust one or more characteristics of light produced by the radiation source component 304 such as, but not limited to: frequency, period, duration, pulse energy, peak power, average power, and wavelength of the optical pulses.

It should be noted that the controller component 316 may be configured to determine a "time-of-flight" value for an optical pulse based on timing information associated with (i) when a given pulse was emitted by radiation source component 304, and (ii) when a portion of the pulse (e.g., from the input beam 324) was detected or received by the receiver component 312.

It is contemplated that the controller component 316 may be configured to analyze one or more characteristics of the electrical signals from the radiation source component 304 and/or the receiver component 312 to determine one or more characteristics of the object 325 such as the distance 390 downrange from the LiDAR system 302.

For example, the controller component 316 may determine the time of flight value and/or a phase modulation value for the emitted pulse of the output beam 320. Let it be assumed that the LiDAR system 302 determines a time-of-flight value "T" representing, in a sense, a "round-trip" time for an emitted pulse to travel from the LiDAR system 302 to the object 325 and back to the LiDAR system 302. As a result, the controller component 316 may be configured to determine the distance 390 in accordance with the following equation:

$$D = \frac{c * T}{2} \quad (Equation\ 1)$$

wherein D is the distance 390, T is the time-of-flight value, and c is the speed of light (approximately $3.0 \times 10^8$ m/s).

As previously alluded to, the LiDAR system 302 may be used to determine the distance to one or more other potential objects located in the surroundings 250. By scanning the output beam 320 across the ROI of the LiDAR system 302 in accordance with a scanning pattern, the LiDAR system 302 is configured to map distances (similar to the distance 390) to respective data points within the ROI of the LiDAR system 302. As a result, the LiDAR system 302 may be configured to render these data points captured in succession (e.g., the point cloud) in a form of the multi-dimensional map.

As an example, this multi-dimensional map may be used by the electronic device 210 for detecting, or otherwise identifying, objects or determining a shape or distance of potential objects within the ROI of the LiDAR system 302. It is contemplated that the LiDAR system 302 may be configured to repeatedly/iteratively capture and/or generate point clouds at any suitable rate for a given application.

It should be noted that a location of a given object in the surroundings 250 of the vehicle 220 may be overlapped, encompassed, or enclosed at least partially within the ROI of the LiDAR system 302. For example, the object 325 may include all or a portion of a person, vehicle, motorcycle, truck, train, bicycle, wheelchair, pushchair, pedestrian, animal, road sign, traffic light, lane marking, road-surface marking, parking space, pylon, guard rail, traffic barrier, pothole, railroad crossing, obstacle in or near a road, curb, stopped vehicle on or beside a road, utility pole, house, building, trash can, mailbox, tree, any other suitable object, or any suitable combination of all or part of two or more objects.

Thus, in accordance with certain non-limiting embodiments of the present technology, the LiDAR system 302 may be used for determining distances to one or more other potential objects located in the surroundings 250 of the vehicle 220 representing the so determined distances (similar to the distance 390) in a form of a point cloud, which further may be used for generating the multi-dimensional map of the surroundings 250. Further, the LiDAR system 302 may be configured for "online" speed and distance registration of the objects located in the surroundings 250, which may further allow for planning trajectory for the vehicle 220 in respect of road safety (avoiding collisions with other vehicles, for example) and passenger comfort.

According to certain non-limiting embodiments of the present technology, the LiDAR system 302 is associated with improving a detection of objects (such as the object 325). In certain embodiments, detection of objects within a close proximity to the vehicle 220 may be improved. This in turn can improve the safety of the vehicle. By close proximity is meant a distance from the housing 330 within which self-reflection ("over saturation") could be a problem. This is related to a power of the radiation source. The higher the power, the larger is a zone of potential over-saturation and "close proximity". For example, for a LIDAR system which can detect objects within 250m to 300m, the "close proximity" zone is about 7-10m from the LIDAR system.

Accordingly, the controller component 316 is configured to execute a method 1000 for operating a LiDAR system, such as the LiDAR system 302, in a manner which can avoid or reduce problems associated with self-reflection, in certain embodiments.

**Computer-implemented methods**

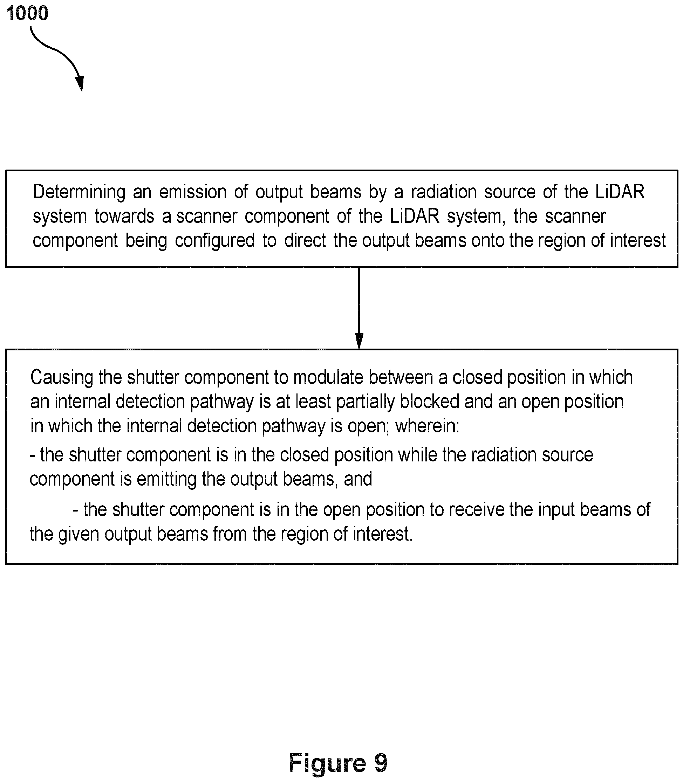

With reference now to Figure 9, there is depicted a flowchart of the method 1000, according to the non-limiting embodiments of the present technology. The method 1000 may be executed by the controller component 316.

**STEP 1010: DETERMINING AN EMISSION OF OUTPUT BEAMS BY A RADIATION SOURCE COMPONENT OF THE LiDAR SYSTEM TOWARDS A SCANNER COMPONENT OF THE LiDAR SYSTEM, THE SCANNER COMPONENT BEING CONFIGURED TO DIRECT THE OUTPUT BEAMS ONTO THE REGION OF INTEREST**

The method 1000 commences at step 1010, where a radiation source component, such as the radiation source component 304, is caused to emit output beams, such as a plurality of the output beam 320. The controller component 316 may cause the radiation source component 304 to emit the output beams 320. The output beams may be directed towards a scanner component, such as the scanner component 314 of the LiDAR system 302, which is configured to direct the output beams 320 onto a region of interest, such as the surroundings 250 of the vehicle 220. The scanner component 314 may be configured to direct the output beams 320 according to given horizontal angular ranges and/or vertical angular ranges. These angular ranges may be predetermined. The radiation source component 304 may be configured to emit the output beams according to a start time of emission and an end time of emission. The controller component 316 may be configured to control the start time of emission and the end time of emission.

The output beams 320 may comprise a series of light pulses, and the start time of emission corresponding to a start of an emission of a first beam in the series of the output beams, and the end time of emission corresponding to an end time of an emission of a last beam in the series of output beams. The controller component 316 may be configured to control one or more of the start time of the emission of the first beam in the series of the output beams; the end time of the emission of the last beam in the series of the output beams; and a duration of each beam in the series of the output beams.

In certain other embodiments, another controller or processor, other than the controller component 316, is arranged control the radiation source component 304.

**STEP 1020: CAUSING A SHUTTER COMPONENT TO MODULATE BETWEEN A CLOSED POSITION IN WHICH THE INNER DETECTION PATHWAY IS AT LEAST PARTIALLY BLOCKED AND AN OPEN POSITION IN WHICH THE INNER DETECTION PATHWAY IS OPEN SUCH THAT THE SHUTTER COMPONENT IS IN THE CLOSED POSITION WHILE THE RADIATION SOURCE COMPONENT IS EMITTING THE OUTPUT BEAMS, AND THE SHUTTER COMPONENT IS IN THE OPEN POSITION TO RECEIVE THE INPUT BEAMS OF THE GIVEN OUTPUT BEAMS FROM THE REGION OF INTEREST**

At step 1020, according to some non-limiting embodiments of the present technology, the controller component 316 may be configured to modulate the shutter component 308 between the open and closed positions such as those described with reference to 6A and 6B. In the closed position, the inner detection pathway 322 to the receiver component 312 is at least partially blocked. In the open position, the inner detection pathway 322 to the receiver component 312 is open. This means that in the closed position, transmission of any light, including self-reflected light from the LiDAR system 302, is at least partially blocked from reaching the receiver component 312. This can avoid or minimize effects due to self reflection and improve detection of objects in the surroundings 250.

The controller component 316 is configured to control the shutter component 308 such that the inner detection pathway 322 is:
at least partially blocked while the radiation source component 304 is emitting the output beams 320, and

- open to receive reflected beams of the given output beams 320, as the input beams 324, from the surroundings 250.

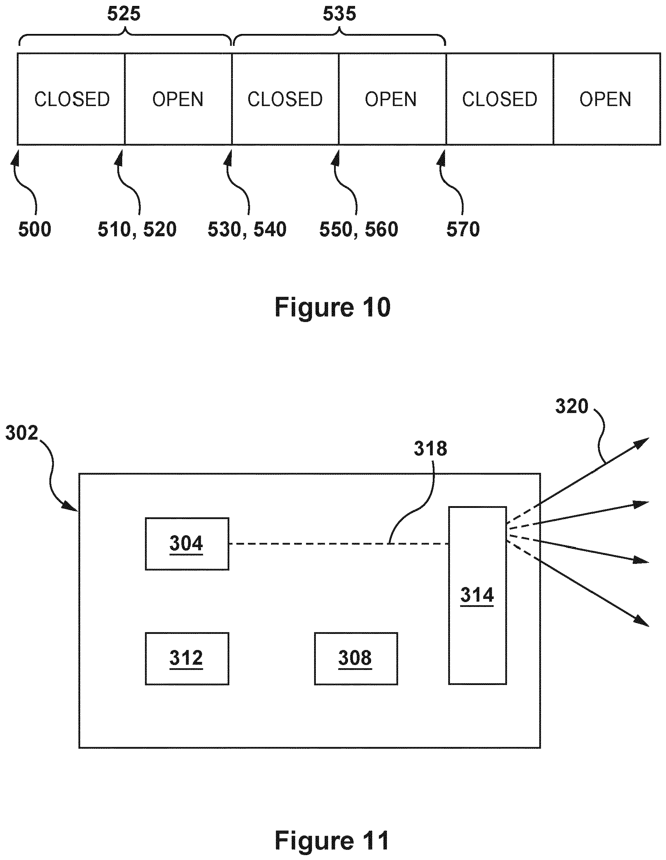

In this respect, in certain embodiments, the controller component 316 is configured to coordinate the closing of the inner detection pathway 322 with the start time of emission of the output beams 320 by the radiation source component 304 (Figure 10). In other words, a start time 500 of the closed position of the shutter component 308 corresponds with a start time of emission of the output beams 320. The start time 500 of the closed position of the shutter component 308 can also correspond to the moment when the controller component sends a command to the radiation source component 304 for starting the emission of a first output beam from the plurality of the output beams in a series.

The controller component 316 is arranged to modulate the shutter component 308 through a plurality of cycles of the open and closed positions. The modulation of the shutter component 308 may be performed over the multiple cycles in synchronization with the radiation source component 304.

An end time 510 of the closed position of the shutter component 308 can be considered as a start time 520 of the open position of the shutter component 308 in the same cycle ("a first cycle 525"). An end time 530 of the open position can be considered as a start time 540 of the closed position in the next cycle ("a second cycle 535"). The closed position of the second cycle will have an end time 550 corresponding to a start time 560 of the open position of the second cycle 535.

In certain other embodiments, the shutter component 308 is modulated between the open and closed positions during an emission of a series of the output beams. In these embodiments, the controller component 316 is arranged to modulate the shutter component 308 between the closed and open positions in synchronization with the individual output beams of the series of output beams leaving the inner emission pathway. In this way, the shutter component 308 moves between open and closed positions a number of times within each output series emission.

The open and closed positions of the shutter component 308 have been illustrated as having the same duration. However, in certain embodiments, the open and closed positions of the shutter component may have different durations. In other words, the inner detection pathway 322 may be open and at least partially open for different durations of time. Similarly, the different cycles of the open and closed positions of the shutter component 308 have been illustrated as repetitions of the first cycle. However, in certain embodiments, the different cycles of the open and closed positions may have different durations from one another.

The controller component 316 is arranged to modulate the shutter component 308 from the closed position to the open position such that the inner detection pathway is opened to receive the reflected given output beams 320, as the input beams 324, from the region of interest.

The end time 510 of the closed position / start time 520 of the open position of the shutter component 308 may be based on the given output beams 320 leaving the LiDAR system 302 into the surroundings 250. Accordingly, in certain embodiments, the controller component 316 causes the shutter component 308 to modulate from the closed position to the open position when the output beams 324 leave the inner emission pathway 318 of the LIDAR system 302. The inner emission pathway 318 is considered to be those optical pathways within the housing 330 of the LiDAR system that the emitted output beams will travel along. Figure 11 illustrates the inner emission pathway 318 in the LiDAR system 302 as dotted lines and the output beams 320 leaving the inner emission pathway 318 as solid lines. The shutter component 308 will be in the closed position, and hence the inner detection pathway 322 at least partially blocked, up until the output beam 320 leaves the housing 330 for transmission to the surroundings 250. In the case of the output beams 320 comprising a series of beams, the shutter component 308 will be in the closed position, and hence the inner detection pathway 322 at least partially blocked, up until the last beam of the series leaves the inner emission pathway 318.

In certain embodiments, the end time of the closed position of the shutter component 308 may be based on whether the shutter component 308 fully or only partially blocks the inner detection pathway 322.

In situations in which the shutter component 308 fully blocks the inner detection pathway 322, in certain embodiments, the end time corresponds to the moment that each one of the output beams 320 in the series leaves the inner emission pathway 318. In other embodiments, the end time corresponds to the moment when all of the output beams 320 in the series leave the inner emission pathway 318.

In situations in which the shutter component 308 only partially blocks the inner detection pathway 322, such as by darkening or shadowing, in certain embodiments, the end time corresponds to the time required to leave the inner emission pathway 318 and propagate a predefined distance from the housing 330 of the LiDAR system. In certain embodiments, the end time corresponds to the moment each one of the output beams 320 in the series leaves the inner emission pathway 318 and travels the predefined distance. In other embodiments, the end time corresponds to the moment when all of the output beams 320 have left the inner emission pathway 318 and traveled the predefined distance. A predefined distance can be defined, in certain embodiments, as a minimal distance from which no internal self-reflection is further detected, or a minimal distance where a signal with an acceptable/detectable signal-to-noise relation of an input beam from a close object can be obtained.

The operation time of the shutter component 308 from the closed position to the open position is thus coordinated with the operation time of the scanner component 314 of the LIDAR system 302. The modulation of the closed position to the open position of the shutter component 308 can thus be determined from a time of emission of the output beams 320 by the radiation source component 304, a distance of the inner emission pathway 318, and a speed of light. For example, if the output beam 320 is emitted by the radiation source component 304 at time, t = 0 seconds, this marks the start time 500 of the closed position of the shutter component 308. Assuming that the inner emission pathway 318 has a distance d, and the output beam has a velocity c, then the end time 510 of the shutter component 308 closed position (or the start time 520 of the open position) can be defined as:

$$\frac{d}{c}. \qquad \text{(Equation 1)}$$

As the distance d, and the velocity c of the output beam 320 can be predetermined for a given LiDAR system, the end time 510 of the shutter component 308 closed position can also be predetermined. Accordingly, in certain embodiments, the controller component 316 is configured to cause the shutter component 308 to modulate from the closed position to the open position at a predetermined time from the emission of the output beams 320.

In certain embodiments, the distance d of the inner emission pathway 318 can be determined as a sum of all pathways between optical elements in the LiDAR system 302 extending from the radiation source component 304 to the last optical element in the LiDAR system 302 before the output beam 320 leaves the housing 330. The last optical element could be a lens for example.

It will be noted that in the case of the output beam 324 propagating to an infinitely small distance from the housing 330, Equation 1 may not apply.

In certain embodiments in which the shutter component 308 partially blocks the inner detection pathway 322, the operation time of the shutter component 308 also differs from that defined in Equation 1. More specifically, in these embodiments, the operation time of the shutter component 308 is determined by a total length of the inner emission pathway plus a variable predefined distance multiplied by 2.

In certain embodiments, the operation time for both cases, when the shutter component 308 fully or only partially blocks the inner detection pathway 322, can be determined experimentally.

In certain other embodiments, the modulation of the shutter component 308 from the closed position to the open position may be determined based on a live monitoring of the inner emission pathway 318 or other part of the LiDAR system 302, instead of based on a predetermined time. In this case, the live monitoring triggers modulation of the shutter component 308.

In certain other embodiments, the modulation of the shutter component 308 from the closed to the open position is based on the given output beams 320 reaching a predetermined distance from the LiDAR system 302. This may be detected by sensors or the like or based on a predetermined time.

For subsequent cycles of shutter component 308 modulation, the controller component 316 may be configured to cause the shutter component 308 to modulate from the open position to the closed position based on a predetermined time interval in certain embodiments.

The modulation from the closed to the open position may be simultaneous with the emission of the output beams 320 by the radiation source component 304. In embodiments where the radiation source component 304 is controlled by the same controller component 316 as the shutter component 308, the controller component 316 may send simultaneous instructions to both the radiation source component 304 and the shutter component 308. In embodiments where the radiation source component 304 is not controlled by the same controller component 316 as the shutter component 308, the controller component 316 may coordinate the modulation of the shutter component 308 to the closed position by monitoring a functioning of the radiation source 304, or through communication with a controller of the radiation source component 304.

Additional steps of the method 1000 comprise the controller component 316 determining data of the object 325 based on the detected input beam 324. The data of the object 325 may then be used by the controller component 316 for operating the vehicle 220. For example, considering the distance 390 of the object, the controller component 316 may be configured to determine a revised trajectory for the vehicle 220.

The method 1020 hence terminates.

Thus, certain non-limiting embodiments of the LiDAR system 302 allow for minimizing or reducing effects of self-reflection and improving detection of objections in the surroundings of the vehicle 220. Further, by at least partially blocking the inner detection pathway during times not relevant to detection of a given reflected output beam, superfluous light not related to objects in the surroundings 250 are kept away from the inner detection pathway. This can reduce or minimize a "noise" in the system, with its related advantages.

Accordingly, these non-limiting embodiments of the LiDAR system 302 allow for registering more reliable data of one or more objects in the surroundings 250 located at short distances from the LiDAR system 302, thereby providing, for example, for (1) generating a more accurate multi-dimensional map of the objects; and (2) more effective controlling operation (such as trajectory-planning) for the vehicle 220 in terms of avoiding collisions with the objects in the surroundings 250, for example.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

While the above-described implementations have been described and shown with reference to particular steps performed in a particular order, it will be understood that these steps may be combined, sub-divided, or re-ordered without departing from the teachings of the present technology. Accordingly, the order and grouping of the steps is not a limitation of the present technology.

## Claims

1. A LiDAR system (302) for detecting objects (325) in a region of interest of an autonomous vehicle (220) comprising:

    a radiation source component (304) configured to emit output beams (320);
    a scanner component (314) configured to direct the output beams (320) onto the region of interest;
    a receiver component (312) configured to receive input beams (324) reflected from objects (325) in the region of interest along an inner detection pathway (322);
    a shutter component (308) configured to modulate between a closed position and an open position, the inner detection pathway (322) being at least partially blocked when the shutter component (308) is in the closed position, and the inner detection pathway (322) being open when the shutter component (308) is in the open position;
    a controller component (316) communicatively coupled to the shutter component (308) such that:

        the shutter component (308) is in the closed position while the radiation source component (304) is emitting the output beams (320), and
        the shutter component (308) is in the open position while receiving the reflected input beams (324) of the given output beams (320) from the region of interest.

**2.** The LiDAR system (302) of claim 1, wherein the controller component (316) is further configured to cause the shutter component (308) to modulate from the closed position to the open position when the output beams (320) leave an inner emission pathway (318) of the LIDAR system (302).

**3.** The LiDAR system (302) of claim 1 or claim 2, wherein the controller component (316) is further configured to cause the shutter component (308) to modulate from the closed position to the open position when the output beams (320) reach a predetermined distance from the LiDAR system (302).

**4.** The LiDAR system (302) of any of claims 1-3, wherein the output beams (320) are emitted as a series of output beams, and the controller component (316) is further configured to cause the shutter component (308) to be in the closed position while the radiation source component (304) is emitting all beams of the series of output beams, and to cause the shutter component (308) to modulate from the closed position to the open position once every beam from the series of the output beams has left an inner emission pathway (318) of the LiDAR system (302).

**5.** The LiDAR system (302) of any of claims 1-4, wherein the output beams (320) are emitted as a series of output beams, and the controller component (316) is further configured to cause the shutter component (308) to be in the closed position while the radiation source component (304) is emitting all the output beams (320) of the series of output beams, and to modulate from the closed position to the open position once every output beam (320) from the series of the output beams has reached a predetermined distance from the LiDAR system (302).

**6.** The LiDAR system (302) of any of claims 1-5, wherein the controller component (316) is configured to cause the shutter component (308) to modulate from the open position to the closed position simultaneously with emission of the output beams (320) by the radiation source component (304).

**7.** The LiDAR system (302) of any of claims 1-6, wherein the controller component (316) is further configured to cause the shutter component (308) to modulate from the open position to the closed position at a predetermined time after emission of the output beams (320) by the radiation source component (308).

**8.** The LiDAR system (302) of any of claims 1-7, wherein the controller component (316) is further configured to cause the shutter component (308) to modulate from the open position to the closed position based on a predetermined time interval.

**9.** The LiDAR (302) system of any of claims 1-8, wherein the shutter component (308) comprises a mechanical shutter device.

**10.** The LiDAR system (302) of claim 9, wherein the mechanical shutter device comprises a rotatable disk (340) having a plurality of slots (342) defined in a body (344), the controller component (316) being further configured to cause the disk (340) to rotate at 500kHz.

**11.** The LiDAR system (302) of any of claims 1-8, wherein the shutter component (308) comprises one of an electro-optical shutter device and a semi-conducting shutter device.

**12.** The LiDAR system (302) of any of claims 1-11, wherein the shutter component (308) comprises semi-transparent elements and is configured to partially block the inner detection pathway (318).

**13.** The LiDAR system (302) of any of claims 1-12, wherein the scanner component (316) comprises one of a rotatable prism and a pivotable mirror.

**14.** The LiDAR system (302) of any of claims 1-13, wherein the receiver component (312) is a photodetector and the shutter component (308) is positioned upstream along the inner detection pathway (322) from the photodetector.

**15.** A method (1000) for detecting objects (325) in a region of interest of an autonomous vehicle (220), the method (1000) executable by a controller component (316) of a LiDAR system (302), the controller component (316) communicatively coupled to a shutter component (308) of the LiDAR system (302), the shutter component (308) being upstream of a receiver component (312) which is configured to receive input beams (324) reflected from objects (325) in the region of interest along an inner detection pathway (322), the method (1000) comprising:

determining an emission of output beams (320) by a radiation source (304) of the LiDAR system (302) towards a scanner component (314) of the LiDAR system (302), the scanner component (314) being configured to direct the output beams (320) onto the region of interest; causing the shutter component (308) to modulate between a closed position in which the inner detection pathway (322) is at least partially blocked and an open position in which the inner detection pathway (322) is open; wherein:

- the shutter component (308) is in the closed position while the radiation source component (304) is emitting the output beams (320), and

- the shutter component (308) is in the open position to receive the input beams (324) of the given output beams (320) from the region of interest.

**Patentansprüche**

1. LiDAR-System (302) zum Detektieren von Objekten (325) in einem interessierenden Bereich eines autonomen Fahrzeugs (220), Folgendes umfassend:

   eine Strahlungsquellenkomponente (304), die konfiguriert ist, um Ausgangsstrahlen (320) zu emittieren;
   eine Abtastkomponente (314), die konfiguriert ist, um die Ausgangsstrahlen (320) auf den interessierenden Bereich zu richten;
   eine Empfängerkomponente (312), die konfiguriert ist, um Eingangsstrahlen (324) zu empfangen, die von Objekten (325) in dem interessierenden Bereich entlang eines inneren Detektionswegs (322) reflektiert werden;
   eine Verschlusskomponente (308), die konfiguriert ist, um zwischen einer geschlossenen Position und einer offenen Position zu modulieren, wobei der innere Detektionsweg (322) mindestens teilweise blockiert ist, wenn sich die Verschlusskomponente (308) in der geschlossenen Position befindet, und der innere Detektionsweg (322) offen ist, wenn sich die Verschlusskomponente (308) in der offenen Position befindet;
   eine Steuerungskomponente (316), die kommunikativ mit der Verschlusskomponente (308) gekoppelt ist, sodass:

   sich die Verschlusskomponente (308) in der geschlossenen Position befindet, während die Strahlungsquellenkomponente (304) die Ausgangsstrahlen (320) emittiert, und sich die Verschlusskomponente (308) in der offenen Position befindet, während sie die reflektierten Eingangsstrahlen (324) der gegebenen Ausgangsstrahlen (320) aus dem interessierenden Bereich empfängt.

2. LiDAR-System (302) nach Anspruch 1, wobei die Steuerungskomponente (316) ferner konfiguriert ist, um zu bewirken, dass die Verschlusskomponente (308) von der geschlossenen Position in die offene Position moduliert, wenn die Ausgangsstrahlen (320) einen inneren Emissionsweg (318) des LiDAR-Systems (302) verlassen.

3. LiDAR-System (302) nach Anspruch 1 oder Anspruch 2, wobei die Steuerungskomponente (316) ferner konfiguriert ist, um zu bewirken, dass die Verschlusskomponente (308) von der geschlossenen Position in die offene Position moduliert, wenn die Ausgangsstrahlen (320) einen vorbestimmten Abstand zu dem LiDAR-System (302) erreichen.

4. LiDAR-System (302) nach einem der Ansprüche 1-3, wobei die Ausgangsstrahlen (320) als eine Reihe von Ausgangsstrahlen emittiert werden und die Steuerungskomponente (316) ferner konfiguriert ist, um zu bewirken, dass sich die Verschlusskomponente (308) in der geschlossenen Position befindet, während die Strahlungsquellenkomponente (304) alle Strahlen der Reihe von Ausgangsstrahlen emittiert, und um zu bewirken, dass die Verschlusskomponente (308) von der geschlossenen Position in die offene Position moduliert, sobald jeder Strahl aus der Reihe der Ausgangsstrahlen einen inneren Emissionsweg (318) des LiDAR-Systems (302) verlassen hat.

5. LiDAR-System (302) nach einem der Ansprüche 1-4, wobei die Ausgangsstrahlen (320) als eine Reihe von Ausgangsstrahlen emittiert werden und die Steuerungskomponente (316) ferner konfiguriert ist, um zu bewirken, dass sich die Verschlusskomponente (308) in der geschlossenen Position befindet, während die Strahlungsquellenkomponente (304) alle Ausgangsstrahlen (320) der Reihe von Ausgangsstrahlen emittiert, und dass sie von der geschlossenen Position in die offene Position moduliert, sobald jeder Ausgangsstrahl (320) aus der Reihe der Ausgangsstrahlen einen vorbestimmten Abstand zu dem LiDAR-System (302) erreicht hat.

6. LiDAR-System (302) nach einem der Ansprüche 1-5, wobei die Steuerungskomponente (316) konfiguriert ist, um zu bewirken, dass die Verschlusskomponente (308) gleichzeitig mit der Emission der Ausgangsstrahlen (320) durch die Strahlungsquellenkomponente (304) von der offenen Position in die geschlossene Position moduliert.

7. LiDAR-System (302) nach einem der Ansprüche 1-6, wobei die Steuerungskomponente (316) ferner konfiguriert ist, um zu bewirken, dass die Verschlusskomponente (308) zu einem vorbestimmten Zeitpunkt nach Emission der Ausgangsstrahlen (320) durch die Strahlungsquellenkomponente (308) von der offenen Position in die geschlossene Position moduliert.

8. LiDAR-System (302) nach einem der Ansprüche 1-7, wobei die Steuerungskomponente (316) ferner konfiguriert ist, um zu bewirken, dass die Verschlusskomponente (308) basierend auf einem vorbestimmten Zeitintervall von der offenen Position in die geschlossene Position moduliert.

9. LiDAR-System (302) nach einem der Ansprüche 1-8, wobei die Verschlusskomponente (308) eine mechanische Verschlussvorrichtung umfasst.

10. LiDAR-System (302) nach Anspruch 9, wobei die mechanische Verschlussvorrichtung eine drehbare Scheibe (340) mit einer Vielzahl von Schlitzen (342) umfasst, die in einem Körper (344) definiert sind, wobei die Steuerungskomponente (316) ferner konfiguriert ist, um zu bewirken, dass sich die Scheibe (340) mit 500 kHz dreht.

11. LiDAR-System (302) nach einem der Ansprüche 1-8, wobei die Verschlusskomponente (308) eine von einer elektrooptischen Verschlussvorrichtung und einer halbleitenden Verschlussvorrichtung umfasst.

12. LiDAR-System (302) nach einem der Ansprüche 1-11, wobei die Verschlusskomponente (308) halbtransparente Elemente umfasst und konfiguriert ist, um den inneren Detektionsweg (318) teilweise zu blockieren.

13. LiDAR-System (302) nach einem der Ansprüche 1-12, wobei die Abtastkomponente (316) entweder ein drehbares Prisma oder einen schwenkbaren Spiegel umfasst.

14. LiDAR-System (302) nach einem der Ansprüche 1-13, wobei die Empfängerkomponente (312) ein Fotodetektor ist und die Verschlusskomponente (308) stromaufwärts entlang des inneren Detektionswegs (322) von dem Fotodetektor positioniert ist.

15. Verfahren (1000) zum Detektieren von Objekten (325) in einem interessierenden Bereich eines autonomen Fahrzeugs (220), wobei das Verfahren (1000) durch eine Steuerungskomponente (316) eines LiDAR-Systems (302) ausführbar ist, wobei die Steuerungskomponente (316) kommunikativ mit einer Verschlusskomponente (308) des LiDAR-Systems (302) gekoppelt ist, wobei sich die Verschlusskomponente (308) stromaufwärts einer Empfängerkomponente (312) befindet, die zum Empfangen von Eingangsstrahlen (324) konfiguriert ist, die von Objekten (325) in dem interessierenden Bereich entlang eines inneren Detektionswegs (322) reflektiert werden, wobei das Verfahren (1000) Folgendes umfasst:

Bestimmen einer Emission von Ausgangsstrahlen (320) durch eine Strahlungsquelle (304) des LiDAR-Systems (302) in Richtung einer Abtastkomponente (314) des LiDAR-Systems (302), wobei die Abtastkomponente (314) konfiguriert ist, um die Ausgangsstrahlen (320) auf den interessierenden Bereich zu richten;

Bewirken, dass die Verschlusskomponente (308) zwischen einer geschlossenen Position, in der der innere Detektionsweg (322) mindestens teilweise blockiert ist, und einer offenen Position, in der der innere Detektionsweg (322) offen ist, moduliert;
wobei:

- die Verschlusskomponente (308) in der geschlossenen Position ist, während die Strahlungsquellenkomponente (304) die Ausgangsstrahlen (320) emittiert, und
- die Verschlusskomponente (308) in der offenen Position ist, um die Eingangsstrahlen (324) der gegebenen Ausgangsstrahlen (320) aus dem interessierenden Bereich zu empfangen.

## Revendications

1. Système LIDAR (302) pour détecter des objets (325) dans une région d'intérêt d'un véhicule autonome (220) comprenant :

un composant source de rayonnement (304) conçu pour émettre des faisceaux de sortie (320) ;
un composant scanner (314) conçu pour diriger les faisceaux de sortie (320) sur la région d'intérêt ;
un composant récepteur (312) conçu pour recevoir des faisceaux d'entrée (324) réfléchis par des objets (325) dans la région d'intérêt le long d'un trajet de détection interne (322) ;
un composant obturateur (308) conçu pour moduler entre une position fermée et une position ouverte, le trajet de détection interne (322) étant au moins partiellement bloqué lorsque le composant obturateur (308) est en position fermée, et le trajet de détection interne (322) étant ouvert lorsque le composant obturateur (308) est en position ouverte ;
un composant contrôleur (316) couplé en communication au composant obturateur (308) de sorte que :

le composant obturateur (308) est en position fermée tandis que le composant source de rayonnement (304) émet les faisceaux de sortie (320), et
le composant obturateur (308) est en position ouverte lors de la réception des faisceaux d'entrée réfléchis (324) des faisceaux de sortie donnés (320) en provenance de la région d'intérêt.

2. Système LIDAR (302) selon la revendication 1, dans lequel le composant contrôleur (316) est en outre conçu pour amener le composant obturateur (308) à moduler de la position fermée à la position ouverte lorsque les faisceaux de sortie (320) quittent un trajet d'émission interne (318) du système LIDAR (302).

3. Système LiDAR (302) selon la revendication 1 ou la revendication 2, dans lequel le composant contrôleur (316) est en outre conçu pour amener le composant obturateur (308) à moduler de la position fermée à la position ouverte lorsque les faisceaux de sortie (320) atteignent une distance prédéterminée par rapport au système LIDAR (302).

4. Système LiDAR (302) selon l'une quelconque des revendications 1 à 3, dans lequel les faisceaux de sortie (320) sont émis sous la forme d'une série de faisceaux de sortie, et le composant contrôleur (316) est en outre conçu pour amener le composant obturateur (308) à être en position fermée pendant que le composant source de rayonnement (304) émet tous les faisceaux de la série de faisceaux de sortie, et pour amener le composant obturateur (308) à moduler de la position fermée à la position ouverte une fois que tous les faisceaux de la série des faisceaux de sortie ont quitté un trajet d'émission interne (318) du système LiDAR (302).

5. Système LiDAR (302) selon l'une quelconque des revendications 1 à 4, dans lequel les faisceaux de sortie (320) sont émis sous la forme d'une série de faisceaux de sortie, et le composant contrôleur (316) est en outre conçu pour amener le composant obturateur (308) à être en position fermée pendant que le composant source de rayonnement (304) émet tous les faisceaux de sortie (320) de la série de faisceaux de sortie, et pour moduler de la position fermée à la position ouverte une fois que tous les faisceaux de sortie (320) de la série des faisceaux de sortie ont atteint une distance prédéterminée par rapport au système LiDAR (302).

6. Système LiDAR (302) selon l'une quelconque des revendications 1 à 5, dans lequel le composant contrôleur (316) est conçu pour amener le composant obturateur (308) à moduler de la position ouverte à la position fermée simultanément avec l'émission des faisceaux de sortie (320) par le composant source de rayonnement (304).

7. Système LiDAR (302) selon l'une quelconque des revendications 1 à 6, dans lequel le composant contrôleur (316) est en outre conçu pour amener le composant obturateur (308) à moduler de la position ouverte à la position fermée à un moment prédéterminé après l'émission des faisceaux de sortie (320) par le composant source de rayonnement (308).

8. Système LiDAR (302) selon l'une quelconque des revendications 1 à 7, dans lequel le composant contrôleur (316) est en outre conçu pour amener le composant obturateur (308) à moduler de la position ouverte à la position fermée sur la base d'un intervalle de temps prédéterminé.

9. Système LiDAR (302) selon l'une quelconque des revendications 1 à 8, dans lequel le composant obturateur (308) comprend un dispositif obturateur mécanique.

10. Système LiDAR (302) selon la revendication 9, dans lequel le dispositif obturateur mécanique comprend un disque rotatif (340) présentant une pluralité de fentes (342) définies dans un corps (344), le composant contrôleur (316) étant en outre conçu pour amener le disque (340) à tourner à 500 kHz.

11. Système LiDAR (302) selon l'une quelconque des revendications 1 à 8, dans lequel le composant obturateur (308) comprend l'un parmi un dispositif obturateur électro-optique et un dispositif obturateur semi-conducteur.

12. Système LiDAR (302) selon l'une quelconque des revendications 1 à 11, dans lequel le composant obturateur (308) comprend des éléments semi-transparents et est conçu pour bloquer partiellement le trajet de détection interne (318).

13. Système LiDAR (302) selon l'une quelconque des revendications 1 à 12, dans lequel le composant scanner (316) comprend l'un parmi un prisme rotatif et un miroir pivotant.

14. Système LiDAR (302) selon l'une quelconque des revendications 1 à 13, dans lequel le composant récepteur (312) est un photodétecteur et le composant obturateur (308) est positionné en amont le long du trajet de détection interne (322) par rapport au photodétecteur.

15. Procédé (1000) pour détecter des objets (325) dans une région d'intérêt d'un véhicule autonome (220), le procédé (1000) pouvant être exécuté par un composant contrôleur (316) d'un système LiDAR (302), le composant contrôleur (316) étant couplé en communication avec un composant obturateur (308) du système LiDAR (302), le composant obturateur (308) étant en amont d'un composant récepteur (312) qui est conçu pour recevoir des faisceaux d'entrée (324) réfléchis par des objets (325) dans la région d'intérêt le long d'un trajet de détection interne (322), le procédé (1000) consistant à :

déterminer une émission de faisceaux de sortie (320) par une source de rayonnement (304) du système LiDAR (302) vers un composant scanner (314) du système LiDAR (302), le composant scanner (314) étant conçu pour orienter les faisceaux de sortie (320) sur la région d'intérêt ; amener le composant obturateur (308) à moduler entre une position fermée dans laquelle le trajet de détection interne (322) est au moins partiellement bloqué et une position ouverte dans laquelle le trajet de détection interne (322) est ouvert ; dans lequel :

- le composant obturateur (308) est en position fermée tandis que le composant source de rayonnement (304) émet les faisceaux de sortie (320), et
- le composant obturateur (308) est en position ouverte pour recevoir les faisceaux d'entrée (324) des faisceaux de sortie donnés (320) en provenance de la région d'intérêt.

**Figure 1**

**Figure 2**

Figure 3

EP 3 982 151 B1

**Figure 4**

**Figure 5**

**Figure 6**

Light
intensity
reaching
receiver
component

closed          open          closed

time

Figure 7

Light
intensity
reaching
receiver
component

closed    open    closed

time

Figure 8

1000

Determining an emission of output beams by a radiation source of the LiDAR system towards a scanner component of the LiDAR system, the scanner component being configured to direct the output beams onto the region of interest

Causing the shutter component to modulate between a closed position in which an internal detection pathway is at least partially blocked and an open position in which the internal detection pathway is open; wherein:

- the shutter component is in the closed position while the radiation source component is emitting the output beams, and

    - the shutter component is in the open position to receive the input beams of the given output beams from the region of interest.

# Figure 9

525                    535

| CLOSED | OPEN | CLOSED | OPEN | CLOSED | OPEN |

500      510, 520   530, 540   550, 560   570

## Figure 10

302

318

320

304

314

312      308

## Figure 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200103510 A1

- US 20180074198 A1